(19) **Europäisches Patentamt**
**European Patent Office**
**Office européen des brevets**

(11) **EP 2 696 520 A1**

(12) **EUROPEAN PATENT APPLICATION**
published in accordance with Art. 153(4) EPC

(43) Date of publication:
**12.02.2014 Bulletin 2014/07**

(21) Application number: **12767511.4**

(22) Date of filing: **15.03.2012**

(51) Int Cl.:
**H04J 1/00** (2006.01)

(86) International application number:
**PCT/JP2012/056772**

(87) International publication number:
**WO 2012/137585 (11.10.2012 Gazette 2012/41)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.04.2011 JP 2011084057**

(71) Applicant: **NTT DOCOMO, INC.**
**Chiyoda-ku**
**Tokyo 100-6150 (JP)**

(72) Inventors:
• **SAGAE, Yuta**
**Tokyo 100-6150 (JP)**
• **UMEDA, Hiromasa**
**Tokyo 100-6150 (JP)**
• **ISHII, Hiroyuki**
**Tokyo 100-6150 (JP)**

(74) Representative: **HOFFMANN EITLE**
**Patent- und Rechtsanwälte**
**Arabellastrasse 4**
**81925 München (DE)**

(54) **USER APPARATUS AND METHOD IN MOBILE COMMUNICATION SYSTEM**

(57) User equipment includes a diplexer that separates an uplink frequency band from a downlink frequency band of different component carriers (CCs); a duplexer that separates an uplink frequency band from a downlink frequency band of each of CCs; a reference value calculation unit that calculates a lower limit and, at least, a reference value being greater than the lower limit using control information from a base station; and a transmitter that transmits an uplink signal with transmission power calculated from the reference value while using a radio resource specified by the control signal in the uplink frequency bands of one or more of the CCs, wherein, when the control signal specifies the radio resource of two or more of the CCs, the lower limit is less than that in a case where the control signal specifies the radio resource of less than two of the CCs.

FIG.6

EP 2 696 520 A1

**Description**

TECHNICAL FIELD

The present invention relates to user equipment and a method of a mobile communication system.

BACKGROUND ART

In this type of technical field, a mobile communication scheme which is a successor of the third generation mobile communication scheme has been studied by a standardization organization, which is 3GPP. Specifically, 3GPP specifies standard specifications of the W-CDMA scheme, the High Speed Downlink Packet Access (HSDPA) scheme, the High Speed Uplink Packet Access (HSUPA) scheme, the Long Term Evolution (LTE) scheme, the LTE-Advanced scheme, and the like. The LTE-Advanced scheme is described in Non-Patent Document 1.

In order to meet the demand of wider bandwidth, carrier aggregation (CA) is performed for the LTE-Advanced scheme. In the carrier aggregation scheme, while a downlink signal is received by simultaneously using a plurality of carriers, an uplink signal can be transmitted by simultaneously using a plurality of carriers. For a case where the carrier aggregation is performed, each of carriers is referred to as a "Component Carrier (CC)." The "Component Carrier (CC)" corresponds to a system carrier in a conventional radio communication system such as that of the LTE scheme. For example, one system carrier provides a communication service by a system bandwidth such as 5 MHz, 10 MHz, 20 MHz, or the like.

For a case where the carrier aggregation is performed, user equipment (UE) includes a diplexer that separates an uplink frequency band of a component subcarrier from a downlink frequency band of another component subcarrier, and a duplexer that separates an uplink frequency band from a downlink frequency band in each of component carriers. In this case, since a bandwidth of the uplink frequency band and a bandwidth of the downlink frequency band, which are separated by the diplexer, are relatively close to each other, in general and in many cases, a large signal is leaked. Accordingly, in general, for the duplexer, it is designed so that they can be sufficiently separated from each other. For a design of a communication channel, the design is made by considering a loss which is generated in this case. In addition to this, in order to simultaneously utilize a plurality of frequency bands, a diplexer is inserted, which was not included in a conventional radio communication scheme. Here, the diplexer is inserted to reduce an effect of the interference which occurs among the frequency bands such that uplink signals leak into downlink signals. In the conventional LTE scheme or the like, the design is made in a condition where the diplexer is not included. Namely, in order to apply the technology of the carrier aggregation, it may be required to add the diplexer, and consequently the insertion loss corresponding to that amount is generated. In general, the insertion loss is obtained by a ratio between a square root of input power Ain and a square root of output power Aout. For example, the insertion loss may be obtained by $-20 \log_{10} |Aout/Ain|$. However, from a view point of power consumption in the user equipment and coverage, it is not preferable to use a diplexer having large  insertion loss. That is because, when a signal is transmitted from an antenna with a certain level of power, the power consumed for a case where the insertion loss is large is greater than the power consumed for a case where the insertion loss is small.

In this manner, with a conventional technique, it is difficult to ensure a battery life and coverage by using a diplexer having a small insertion loss.

RELATED ART DOCUMENT

[NON-PATENT DOCUMENT]

Non-Patent Document 1: 3GPP TS36.913 (V8.0.1)

SUMMARY OF THE INVENTION

PROBLEM TO BE SOLVED BY THE INVENTION

An object of the present invention is to make it possible to use a diplexer having a small insertion loss in user equipment that can perform carrier aggregation.

MEANS FOR SOLVING THE PROBLEM

The user equipment according to one embodiment is user equipment that can perform carrier aggregation. The user equipment includes a diplexer that separates an uplink frequency band of a first component carrier from a downlink frequency band of a second component carrier; a duplexer that separates an uplink frequency band from a downlink frequency band of each of a plurality of component carriers; a reference value calculation unit that calculates a lower limit value and, at least, a reference value using control information which is received from a base station, wherein the reference value is greater than the lower limit value; and a transmitter that transmits an uplink signal with transmission power calculated from the reference value while using a radio resource in the uplink frequency bands of one or more of the component carriers, wherein the radio resource is specified by the control signal. When the control signal specifies the radio resource of two or more of the component carriers, the lower limit value is a value which is smaller than the lower limit value for a case where the control signal specifies the radio resource of less than two of the component carriers.

EFFECT OF THE PRESENT INVENTION

According to the embodiment, the diplexer having the small insertion loss can be used in the user equipment that can perform the carrier aggregation.

BRIEF DESCRIPTION OF THE DRAWINGS

FIG. 1 is a conceptual diagram of a system that can be used in an embodiment;
FIG. 2 is a conceptual diagram of user equipment;
FIG. 3 is a functional block diagram regarding a transmitter and a receiver shown in FIG. 2;
FIG. 4 is a diagram showing existence of five CCs;
FIG. 5 is a diagram showing a situation where $\Delta T_{CA}$ is set for each combination of CCs; and
FIG. 6 is a diagram showing an operation example in the embodiment.

EMBODIMENTS FOR CARRYING OUT THE INVENTION

An embodiment is explained from the following view points.

1. System
2. User equipment (outline)
3. User equipment (detail)
4. Operation example

[First embodiment]

<1. System>

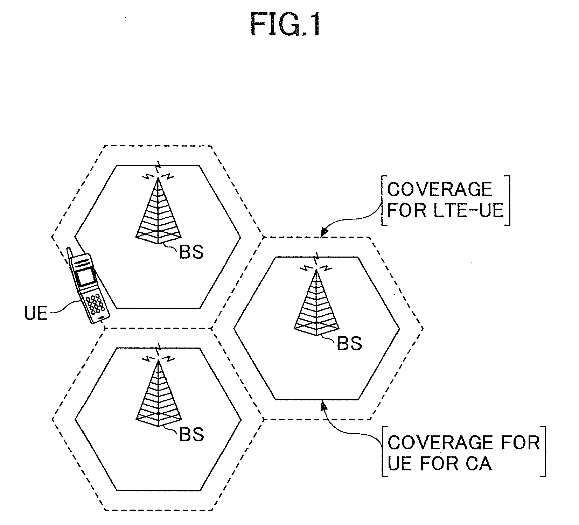

FIG. 1 shows a conceptual diagram of a system which can be used in an embodiment. In the example shown in the figure, there are shown three cells; base stations (eNodeBs) in the corresponding cells; and user equipment (UE). The system is any system which can perform carrier aggregation. Typically, it is an LTE-Advanced system. The user equipment (UE) includes at least a diplexer that separates an uplink frequency band of a first component carrier from a downlink frequency band of a second component carrier; and a duplexer that separates an uplink frequency band from a downlink frequency band for each of a plurality of component carriers. As explained in the background art, in general, a diplexer is required for suppressing leaking of the uplink signals among the component carriers. By inserting the diplexer, it is possible to prevent an uplink signal in a frequency band from interfering with a downlink signal in another frequency band. However, since an insertion loss occurs by inserting the diplexer, a range of coverage is reduced. In the figure, the range of the coverage which is indicated by the dashed lines is for current generic user equipment (UE) that does not conform to the carrier aggregation technology. The range which is indicated by the solid lines is for user equipment that conforms to the carrier aggregation technology.

<2. User equipment (outline)>

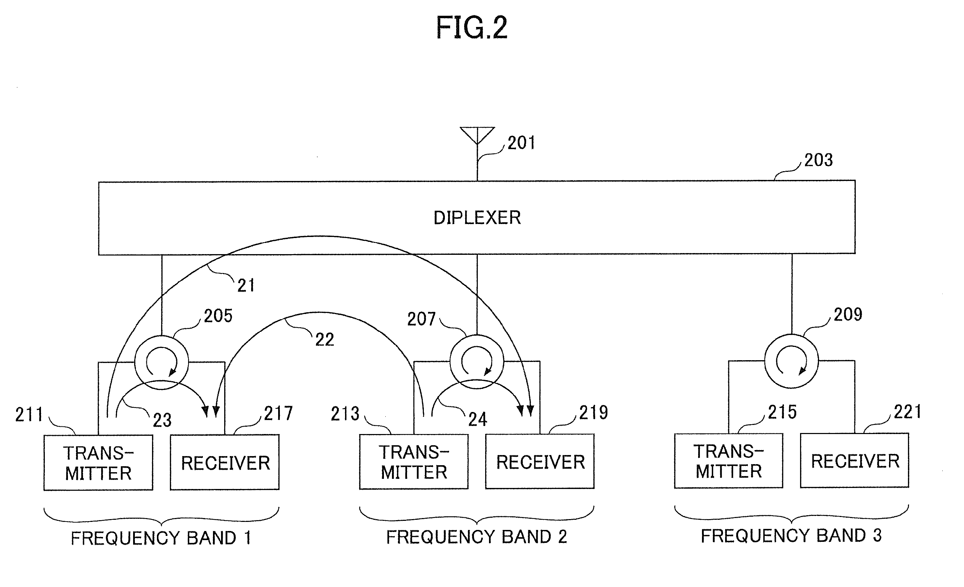

FIG. 2 shows a conceptual diagram of the user equipment. The user equipment is any communication device that can perform the carrier aggregation. Specifically, the user equipment may be a mobile phone, an information terminal, a high-performance mobile phone, a smart phone, a tablet computer, a personal digital assistant, a portable personal computer, or the like. However, the user equipment is not limited to these. The user equipment includes an antenna 201; a diplexer 203 which is connected to the antenna; duplexers 205, 207, and 209 which are connected to the diplexer;

transmitters 211, 213, and 215 that are connected to the duplexers; and receivers 217, 219, and 221 that are connected to the duplexers.

The antenna 201 is used for transmitting and receiving radio signals. Here, a plurality of antennas may be connected to the diplexer so that the antennas correspond to the frequency bands, respectively. The transmitted and received signals are signals of one or more component carriers. For the case of the embodiment, since the same antenna is used for transmission and reception, the diplexer 203 and the duplexers 205, 207, and 209 are used. For simplicity of the illustration, only one antenna is depicted. However, a number of the antennas may be greater than or equal to two.

The diplexer 203 is connected to the antenna, and the diplexer 203 separates an uplink frequency band of a component carrier from a downlink frequency band of another component carrier. It is assumed that the insertion loss of the diplexer 203 in the embodiment is small. Namely, a ratio of output power relative to power which is input to the diplexer is large. Thus, attenuation received by a transmission signal which is transmitted through the diplexer 203 and the antenna 201 is assumed to be sufficiently small. In the example shown in the figure, it is assumed that three component carriers exist, and the three component carriers are indicated as frequency bands 1, 2, and 3, respectively. However, the number of the component carriers is arbitrary. For a case where the carrier aggregation is performed, two or more component carriers exist which can be simultaneously used for communication. One component carrier corresponds to one carrier for an LTE communication system, for example. Such a carrier provides a communication service by a system bandwidth of, for example, 1.4 MHz, 3 MHz, 5 MHz, 10 MHz, or 20 MHz.

The duplexers 205, 207, and 209 are connected to the diplexer 203. Each of the duplexers separates an uplink frequency band from a downlink frequency band of each of the component carriers. The diplexer and the duplexer are common in a point that they separate the uplink frequency band from the downlink frequency band. However, they are different in a point that, for the diplexer, the uplink frequency band and the downlink frequency band, which are separated, belong to different component carriers, while for the duplexer, they belong to the same component carrier.

The transmitters 211, 213, and 215 are connected to the duplexers, which are corresponding to the transmitters 211, 213, and 215. The transmitters 211, 213, and 215 generate uplink transmission signals of the component carriers of the transmitters 211, 213, and 215, respectively. As described later, the transmitter generates a transmission signal with transmission power which is suitably adjusted, and the transmitter transmits it.

The receivers 217, 219, and 221 are connected to the duplexers, which are corresponding to the receivers 217, 219, and 221. The receivers 217, 219, and 221 receive downlink signals of the component carriers of the receivers 217, 219, and 221, respectively. As described later, the downlink signal includes a data signal and a control signal, for example. The control signal includes an RRC signaling message and scheduling information, for example.

As referred to in the background art, an insertion loss of a diplexer becomes large, when the diplexer is designed, so that an uplink signal of a component subcarrier is prevented from leaking into a downlink frequency band of another component subcarrier. Such leaking signal components are indicated by the arrows 21 and 22. Furthermore, in a frequency band of each of the component carriers, theoretically, it is possible that an uplink signal leaks into a downlink frequency band. However, for a case of a generic LTE system, since there is a leakage from a neighboring frequency band, the duplexer is designed to have a sufficiently large attenuation characteristic, so that the duplexer is not affected by the leakage, and an effect of an insertion loss by the attenuation characteristic is considered in an RF standard of a receiving sensitivity, for example. Incidentally, such leaking signal components are indicated by the arrows 23 and 24. Regarding the leaking component 23 and 24 in the same component carriers, as described above, the design is suitably made, so that the leakage is prevented from occurring. When the diplexer is inserted for the carrier aggregation, an insertion loss occurs by its effect. In general, since a bandwidth is wide, across which a frequency characteristic of the diplexer is considered, it is difficult to reduce the insertion loss while suppressing the leakage for the leaking signal components 21 and 22 between the component carriers. In general, the design is made so as to suppress the effect of the leakage. That is because the occurrence of the leakage implies the necessity to reduce the power of the uplink transmission signal.

In the embodiment, with respect to the above-described matter, improvements in performance, such as the receiving sensitivity, and in power consumption are achieved by reducing the effect of the insertion loss and allowing occurrence of the leakage. In such a case, the transmission power is restricted by the effect of the insertion loss. In the embodiment, for user equipment in which an insertion loss is small but transmission power is restricted, a problem of controlling in such a case can be addressed by changing the current operation to the operation described below.

Incidentally, for simplicity of the illustration, only the leaking components regarding the frequency bands 1 and 2 are indicated by the arrows. Actually, a leaking component exists for the frequency band 3.

<3. User equipment (detail)>

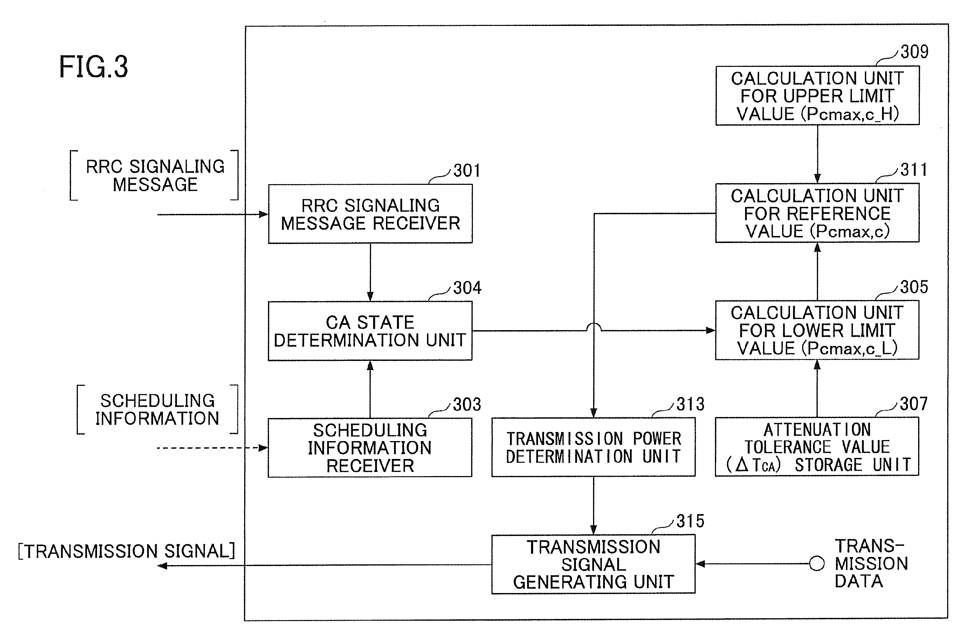

FIG. 3 shows a functional block diagram regarding the transmitters 211, 213, and 215, and the receivers 217, 219, and 221 of the user equipment which is shown in FIG. 2. FIG. 3 indicates an RRC signaling message receiver 301; a scheduling information receiver 303; a CA state determination unit 304; a calculation unit 305 for a lower limit value (Pcmax,c_L) of the maximum transmission power; an attenuation tolerance ($\Delta T_{CA}$) storage unit 307; a calculation unit 309 for an upper limit value (Pcmax,c_H) of the maximum transmission power; a calculation unit 311 for the maximum transmission power (Pcmax,c); a transmission power determination unit 313; and a transmission signal generating unit 315.

The RRC signaling message receiver 301 receives a control information including an RRC signaling message through a downlink frequency band of a component carrier, and the RRC signaling message receiver 301 retrieves configuration information from an RRC signaling message. The configuration information indicates whether the carrier aggregation is performed and a plurality of component carriers which is used for performing the carrier aggregation.

The scheduling information receiver 303 retrieves scheduling information from the control signal which is received through a downlink frequency band of a component carrier. The scheduling information indicates a radio resource which is allocated to the user equipment. When the carrier aggregation is performed, the radio resource is specified for each of the component carriers. The control signal may be a physical downlink control channel (PDCCH), for example.

The CA state determination unit 304 determines an allocation state of the radio resource based on the configuration information which is received by the RRC signaling message receiver 301 and the scheduling information which is received by the scheduling information receiver 303, and the CA state determination unit 304 informs the allocation state to the calculation unit 305 which is for the lower limit value (Pcmax, c_L) of the maximum transmission power. Here, the lower limit value of the maximum transmission power indicates a lower limit value of a range of the maximum transmission power. The range of the maximum transmission power is required to be set as the maximum transmission power which is defined as a standard, based on the allocation state of the resource and the information of the frequency band to be used. The allocation state of the radio resource is determined based on whether the carrier aggregation is performed, and when it is performed, the allocation state is determined, for example, based on which radio resource is allocated to which component carrier.

For example, in a communication environment of user equipment (UE), suppose that five candidates (which are B1, B2, B3, B4, and B5) for a component carrier exist, and that a base station (eNodeB) determines to use three of them (which are B1, B4, and B5) for carrier aggregation. In this case, the configuration information indicates that the carrier aggregation is performed, and that three component carriers (which are B1, B4, and B5) are used.

In the component carrier which is to be used, the radio resource which is concretely used is determined based on the scheduling information. In this case, the scheduling information may not directly indicate the component carrier to which the radio resource belongs. Here, the radio resource is allocated to the user equipment. For example, supposed that five candidates (which are B1, B2, B3, B4, and B5) for a component carrier exist, and that a base station (eNodeB) determines that three of them (which are B1, B4, and B5) are used for carrier aggregation. In this case, the scheduling information may only specify a resource block number $N_{RB1}$ which is allocated to a first one of the three component carriers; a resource block number $N_{RB2}$ which is allocated to a second one of the three component carriers; and a resource block number $N_{RB3}$ which is allocated to a third one of the three component carriers. That is because it is possible to determine that the three component carriers, which are used for the carrier aggregation, are B1, B2, and B3 from the configuration information. Here, the scheduling information may include information which concretely indicates that the three component carriers, which are to be used, are B1, B4, and B5.

The calculation unit 305 for the lower limit value (Pcmax, c_L) determines the lower limit value Pcmax, c_L of a reference value Pcmax,c, which indicates the maximum transmission power based on information of the allocation state of the radio resource which is retrieved from the CA state determination unit 304. In a subframe to which the radio resource is allocated, the reference value Pcmax, c is between the lower limit value Pcmax, c_L and the upper limit value Pcmax, c_H. In the user equipment, the lower limit value Pcmax, c_L, the reference value Pcmax,c, and the upper limit value Pcmax, c_H are calculated for each of the component carriers. The lower limit value Pcmax, c_L is obtained, for example, by the following formula:

$$\text{Pcmax,c\_L} = \text{MIN}\{\text{PEMAX} - \Delta Tc,\ P_{PowerClass} - (\text{MPR} + \text{A-MPR}) - \Delta Tc - \Delta T_{CA}\}$$

Here, MIN{x, y} is a function which returns the smaller of x and y. PEMAX represents the maximum transmission power which is transmitted from a network to the user equipment (UE), and which may be set by the UE. For example, the maximum transmission power PEMAX for an environment such as in a hospital may be set to be smaller than that for an urban area. For a case where there is large variation in a position in a component to which a frequency is allocated, it is not always possible to achieve sufficient transmission power. $\Delta Tc$ represents a mitigation amount which is defined by considering such effect. $P_{PowerClass}$ represents the maximum transmission power by the performance of the user equipment as hardware. MPR (Maximum Power Reduction) is a mitigation amount which is determined by a transmission format and a number of resource blocks. A-MRP (Additional-MPR) is a mitigation amount with respect to the maximum transmission power for a case where an interference level is not satisfied by large transmission power. Here, there exists a neighboring system in a used frequency band, and the interference level to the system is defined. For example, when a group of consecutive resource blocks is allocated, it is possible that interference is induced on a frequency and on another system which are neighboring to a radio frequency band which is used by the system. The mitigation amount is determined so as to suppress the interference. $\Delta T_{CA}$, which is introduced in the embodiment, is described later.

The attenuation tolerance ($\Delta T_{CA}$) storage unit 307 stores a value of an attenuation tolerance variable ($\Delta T_{CA}$), which is introduced by the embodiment. When the carrier aggregation is performed, and when radio resources of two or more component carriers are allocated to the user equipment, the attenuation tolerance variable takes a predetermined value. The attenuation tolerance variable $\Delta T_{CA}$ may be set to be zero for other cases. The other cases are when the carrier aggregation is not performed and when the carrier aggregation is performed, but the actually allocated radio resource is for one component carrier. The value of the attenuation mitigation variable is designed by considering both the value of the insertion loss which accompanies the additional insertion of the diplexer and the value which mitigates the transmission power so as not to provide interference with other component carriers, regardless of the utilization of the carrier aggregation. Namely, the attenuation mitigation variable $\Delta T_{CA}$ is determined by considering both an amount of the insertion loss by the diplexer and an amount of the transmission power, which is reduced by considering an amount of the interference which is induced on another frequency band during the performance of the carrier aggregation. For a case where the carrier aggregation is not performed, since there is no interference with the other frequency band, $\Delta T_{CA}$ can be set to be small compared to the case where the carrier aggregation is performed.

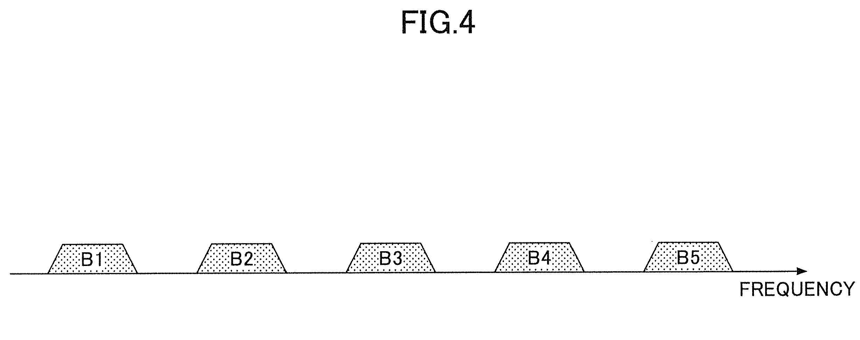

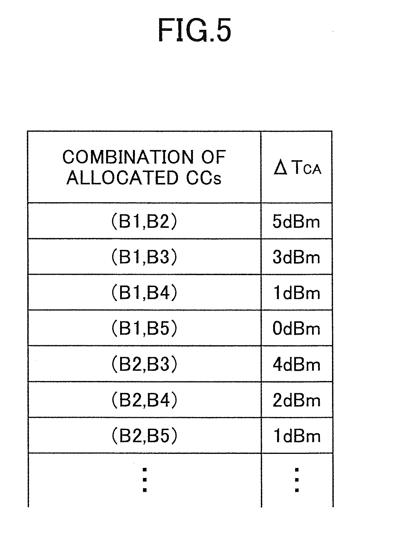

The predetermined value may be stored as a table, for example. The values of the attenuation mitigation variable are determined in advance in accordance with combinations of two or more component carriers. For example, for a case where five component carriers B1 - B4 exist such as shown in FIG. 4, the attenuation mitigation values $\Delta T_{CA}$ may be determined as shown in FIG. 5 corresponding to various combinations of the component carriers. For a case where radio resources of three component carriers are allocated, such as a case where B1, B2, and B3 are allocated, three combinations of (B1, B2); (B1, B3); and (B2, B3) can be considered. In this case, the greatest attenuation mitigation value (which is 5 dBm for the case of (B1, B2)) may be used as the value of $\Delta T_{CA}$. However, it is not mandatory to use the greatest value.

The calculation unit 309 of FIG. 3, which is for the upper limit value (Pcmax, c_H) of the maximum transmission power, determines the upper limit value Pcmax, c_H of the reference value Pcmax,c, which is used for determining the maximum transmission power. The upper limit value Pcmax, c_H can be obtained, for example, by the following formula:

$$\mathrm{Pcmax,c\_H \ = \ MIN\{PEMAX, \ P_{PowerClass}\}}$$

As described above, MIN{x,y} is the function which returns the smaller of x and y. Since PEMAX is already described, it is omitted here.

The calculation unit 311 for the reference value (Pcmax,c) sets it between the lower limit value Pcmax, c_L and the upper limit value Pcmax, c_H, so that a sufficient level of the interference, which is to be provided, is achieved.

$$\mathrm{Pcmax,c\_L \ < \ Pcmax,c \ < \ Pcmax,c\_H}$$

It is required that the user equipment meets predefined receiver performance in a condition where transmission is performed with the reference value Pcmax,c. In general, when user equipment (UE) transmits a signal, a certain amount of the signal leaks from a transmitter to a receiver through a duplexer or a diplexer. The leaked noise component should be small to the extent that the receiving quality of the downlink signal can be maintained. Namely, the receiver performance indicates that the receiving quality of the downlink signal can be maintained against the noise component, which leaks from the transmitter to the receiver.

Incidentally, when the carrier aggregation is performed, and radio resources of two or more component carriers are allocated to the user equipment, the noise components which leak from the transmitter to the receiver through the duplexer or the diplexer are greater in quantity, compared to other cases. Accordingly, the condition with respect to the receiver performance becomes more severe. In such a case, it is necessary to mitigate the maximum transmission power or to mitigate the target receiver performance. For example, for a case where the maximum transmission power is mitigated, suppose the maximum transmission power with which the conventional user equipment can meet the receiver performance is 23 dBm. In this case, if the carrier aggregation technique is applied, the maximum transmission power becomes transmission power which is less than that. For example, the maximum transmission power becomes 20 dBm. However, in such a case, the maximum transmission power becomes less than Pcmax, c_L, which is one of the reference values of the maximum transmission power and which indicates the lower limit value of the maximum transmission power. Thus, it is not possible to perform transmission while satisfying the receiving quality. In the embodiment, for calculating the lower limit value Pcmax, c_L, the attenuation tolerance variable $\Delta T_{CA}$, such as 5dBm, is added. By doing this, the lower limit value Pcmax, c_L takes a lower value.

As described above, when the carrier aggregation is performed, and the radio resources of the two or more component carriers are allocated to the user equipment, the attenuation tolerance variable $\Delta T_{CA}$ takes the predetermined value (FIG. 5). For other cases, it may be set to be 0. Accordingly, the above-described operation of allowing the lower transmission power, which is lower than the lower limit value Pcmax, c_L by the amount corresponding to the attenuation tolerance variable $\Delta T_{CA}$, in response to that the receiving condition becomes more severe, is performed only for the case where the radio resources of the two or more component carriers are allocated to the user equipment. For the other cases, the attenuation tolerance variable $\Delta T_{CA}$ may be assumed to be 0. In other words, the attenuation tolerance variable $\Delta T_{CA}$ is determined in advance, so that the receiving condition is satisfied by sufficiently lowering the lower limit value Pcmax, c_L, when the carrier aggregation is performed, and when the radio resources of the two or more component subcarriers are allocated to the user equipment. Since the receiving condition varies depending on the combination of the two or more component carriers, which are to be allocated, the attenuation tolerance variable $\Delta T_{CA}$ is also determined in advance depending on the combination of the component carriers.

The transmission power determination unit 313 determines the transmission power by the calculated reference value Pcmax,c. Specifically, the transmission power determination unit determines such that the transmission power of a transmission signal is less than or equal to the reference value Pcmax,c.

The transmission signal generating unit 315 generates an uplink transmission signal by using a radio resource, which is specified by the configuration information and the scheduling information, and by the transmission power which is calculated from the reference value, in an uplink frequency band of one or more component carriers. The transmission signal is wirelessly transmitted through the duplexer, the diplexer, and the antenna.

<4. Operation example>

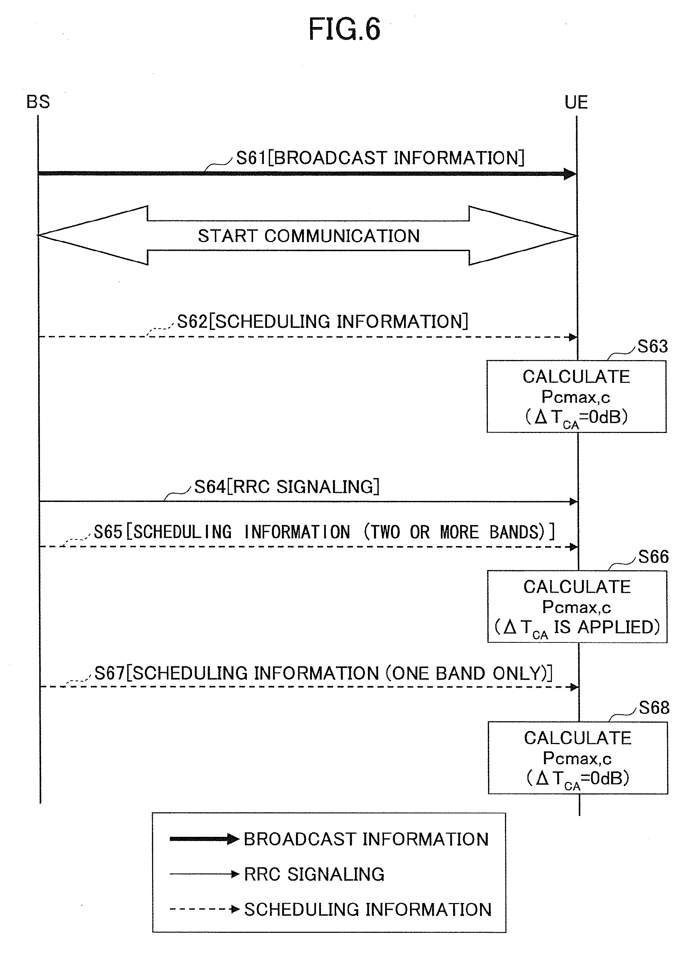

FIG. 6 shows an example of operations which are performed between the user equipment (UE) such as shown in FIGS. 2 and 3 and the base station (BS) in the system such as shown in FIG. 1. It is assumed that five component carriers exist, as shown in FIG. 4, and that the attenuation tolerance variable $\Delta T_{CA}$ is determined in advance, as shown in FIG. 5.

At step S61, the user equipment (UE) receives broadcast information; establishes a radio channel with the base station (BS); establishes a logical channel with a switching center; and starts communication.

At step S62, the base station (BS) transmits scheduling information to the user equipment (UE). The scheduling information indicates a radio resource allowed to the user equipment (UE) in the uplink and a transmission format (a data modulation scheme and a channel coding scheme), for example. At this time, it is assumed that the carrier aggregation is not yet performed. Thus, the scheduling information specifies a radio resource of any one of the component carriers.

At step S63, the user equipment (UE) calculates the reference value Pcmax,c. As described above, the reference value Pcmax,c satisfies the inequality of Pcmax, c_L < Pcmax,c < Pcmax, c_H, and it is required to meet the predetermined receiver performance at that transmission power. For the case of the current example, since the carrier aggregation is not performed, the attenuation tolerance variable $\Delta T_{CA}$ for obtaining the lower limit value Pcmax, c_L is 0. Though it is not concretely shown in the operation flow, the uplink transmission signal is transmitted with the transmission power which is less than or equal to the reference value Pcmax,c by using information regarding an allocated radio resource, which is informed by the scheduling information.

At step S64, the base station (BS) transmits the RRC signaling message to the user equipment (UE). The RRC signaling message includes the configuration information which indicates that the carrier aggregation is performed and which indicates two or more component carriers to be used. For convenience of the explanation, it is assumed that the user equipment (UE) is informed that three component carriers of B1, B2, and B5 are used, among the five component carriers such as shown in FIG. 4.

At step S65, the base station (BS) transmits scheduling information to the user equipment (UE). This scheduling information is in common with that of step S62 in a point that it indicates the radio resource which is allowed to the user equipment (UE) in the uplink and the transmission format (the data modulation scheme and the channel coding scheme). However, the scheduling information which is transmitted at step S65 is different from that of step S62 in a point that it specifies resource blocks of the corresponding three component carriers. For example, the scheduling information indicates a resource block number $N_{RB1}$ in a first component carrier CC1; a resource block number $N_{RB2}$ in a first component carrier CC2; and a resource block number $N_{RB3}$ in a third component carrier CC3. Since the configuration information which is received at step S64 specifies B1, B2, and B5, it is possible to concretely determined what the first, second, and third component carriers CC1, CC2, and CC3 are (CC1 = B1, CC2 = B2, and CC3 = B5).

At step S66, the user equipment (UE) calculates the reference value Pcmax,c. As described above, the reference value Pcmax,c satisfies the inequality of Pmax, c_L < Pcmax,c < Pcmax, c_H, and the user equipment is required to operate while meeting the receiver performance. For the case of the current example, since the carrier aggregation is performed and the radio resources of the two or more component carriers are allocated, the attenuation tolerance variable $\Delta T_{CA}$ for obtaining the lower limit value Pcmax, c_L takes a predetermined value, such as shown in FIG. 5. For the case of the example shown in FIG. 5, since the currently allocated component carriers are B1, B2, and B5, 5 dBm of (B1, B2), 0 dBm of (B1, B5), and 1 dBm of (B2, B5) are obtained. Among these, 5 dBm of (B1, B2) is the greatest. Thus, the attenuation tolerance variable $\Delta T_{CA}$ is set to be 5 dBm. However, it is not mandatory to set it to be the greatest value. As described above, due to the attenuation tolerance variable $\Delta T_{CA}$ = 5 dBm, the lower limit value Pcmax, c_L takes a value which is less than that of the case of $\Delta T_{CA}$ = 0 dBm. Accordingly, the reference value Pcmax,c also can take a value which is less than that of the case of $\Delta T_{CA}$ = 0 dBm.

At step S67, the base station (BS) transmits scheduling information to the user equipment (UE). This scheduling information is in common with that of step S64 in a point that it indicates the radio resources which are allowed to the user equipment (UE) in the uplink and the transmission format (the data modulation scheme and the channel coding scheme). However, the scheduling information which is transmitted at step S67 is different from that of step S65 in a point that it allocates a radio resource of only one component carrier.

At step S68, the user equipment (UE) calculates the reference value Pcmax,c. As described above, the reference value Pcmax,c satisfies the inequality of Pmax, c_L < Pcmax,c < Pcmax, c_H. It is required to satisfy the predetermined receiving quality under this condition of the transmission power. For the case of the current example, the carrier aggregation is performed, but only the radio resource corresponding to the one component carrier is allocated. Thus, the attenuation tolerance variable $\Delta T_{CA}$ for obtaining the lower limit value Pcmax, c_L may be 0. Though it is not concretely shown in the operation flow, an uplink transmission signal is transmitted with the transmission power which is less than or equal to the reference value Pcmax,c by using the radio resource, which is specified by the scheduling information.

As described, when the carrier aggregation is performed, and when radio resources of two or more component carriers are allocated to the user equipment (UE), the effect of an uplink signal affects receiving performance of another allocated component carrier. In such a case, conventionally, a diplexer is inserted, and a sufficient frequency characteristic is maintained, even if the insertion loss becomes greater to a certain extent. However, even for a case where, for example, an existing LTE system was operated, it was difficult to ensure sufficient receiving quality and transmission power, due to the effect of the insertion loss. Contrary to this, the embodiment allows the effect of the interference from the uplink signal to the frequency band of the downlink signal among the components. In that case, in order to prevent degradation of the receiving quality of a downlink signal from being increased due to the actual interference, a tolerance amount for that purpose is considered for the lower limit value Pcmax, c_L of the maximum transmission power of the uplink signal. By doing this, the maximum transmission power Pcmax,c can also take a small value. Consequently, it is possible to reduce the likelihood that a transmission signal which is transmitted from a transmitter leaks into a downlink frequency band of another component carrier through a diplexer, and appropriate receiving quality and transmission power can be maintained.

When the carrier aggregation is not performed, and only a radio resource of one component carrier is allocated, no leakage occurs among the component carriers. Thus, the attenuation tolerance variable $\Delta T_{CA}$ can be set to be 0, or it can be a small value compared to a case of performing the carrier aggregation. In this case, the transmitter is prompted to increase the transmission power compared to a case where radio resources of two or more component carriers are allocated. Since the insertion loss of the diplexer is small, the transmission signal, which is transmitted through the diplexer, is strong enough as it is, thereby ensuring broad coverage. Or, it is possible to reduce the power consumption.

Hereinabove, the present invention is explained by referring to the specific embodiment. However, the embodiment is merely illustrative, and variations, modifications, alterations and substitutions could be conceived by those skilled in the art. For example, the present invention may be applied to any suitable mobile communication system that performs the carrier aggregation. Specific examples of numerical values are used in order to facilitate understanding of the invention. However, these numerical values are simply illustrative, and any other appropriate values may be used, except as indicated otherwise. Specific examples of the formulas are used in order to facilitate understanding of the invention. However, these formulas are simply illustrative, and any other appropriate formulas may be used, except as indicated otherwise. The separations of the embodiment or the items are not essential to the present invention. Depending on necessity, subject matter described in two or more items may be combined and used, and subject matter described in an item may be applied to subject matter described in another item (provided that they do not contradict). For the convenience of explanation, the devices according to the embodiment of the present invention are explained by using functional block diagrams. However, these devices may be implemented in hardware, software, or combinations thereof. The software may be prepared in any appropriate storage medium, such as a random access memory (RAM), a flash memory, a read-only memory (ROM), an EPROM, an EEPROM, a register, a hard disk drive (HDD), a removable disk, a CD-ROM, a database, a server, and the like. The present invention is not limited to the above-described embodiments, and various variations, modifications, alterations, substitutions and so on are included, without departing from the spirit of the present invention.

The present international application claims priority based on and claims the benefit of priority of Japanese Patent Application No. 2011-084057, filed on April 5, 2011, the entire contents of which are hereby incorporated by reference.

LIST OF REFERENCE SYMBOLS

| 201: | Antenna |
|---|---|
| 203: | Diplexer |
| 205, 207, 209: | Duplexers |
| 211, 213, 215: | Transmitters |
| 217, 219, 221: | Receivers |
| 301: | RRC signaling message receiver |
| 303: | Scheduling information receiver |
| 304: | CA state determination unit |
| 305: | Calculation unit for lower limit value (Pcmax, c_L) |
| 307: | Attenuation tolerance value ($\Delta T_{CA}$) storage unit |
| 309: | Calculation unit for upper limit value (Pcmax, C_H) |
| 311: | Calculation unit for reference value (Pcmax,c) |
| 313: | Transmission power determination unit |
| 315: | Transmission signal generating unit |

**Claims**

1.  User equipment capable of performing carrier aggregation, the user equipment comprising:

    a diplexer that separates an uplink frequency band of a first component carrier from a downlink frequency band of a second component carrier;
    a duplexer that separates an uplink frequency band from a downlink frequency band of each of a plurality of component carriers;
    a reference value calculation unit that calculates a lower limit value and, at least, a reference value using control information which is received from a base station, wherein the reference value is greater than the lower limit value; and
    a transmitter that transmits an uplink signal with transmission power calculated from the reference value while using a radio resource in the uplink frequency bands of one or more of the component carriers, wherein the radio resource is specified by the control signal,
    wherein, when the control signal specifies the radio resource of two or more of the component carriers, the lower limit value is a value which is less than the lower limit value in a case where the control signal specifies the radio resource of less than two of the component carriers.

2.  The user equipment according to claim 1,
    wherein an attenuation tolerance variable value is determined in advance depending on a combination of the two or more of the component carriers, wherein the value of the attenuation tolerance variable is used for calculating the lower limit value.

3.  The user equipment according to claim 2,
    wherein, when the control signal specifies the radio resource of the less than two of the component carriers, the value of the attenuation tolerance variable is zero.

4.  The user equipment according to claim 1,
    wherein the control signal includes configuration information, wherein the configuration information indicates whether to perform the carrier aggregation, and the configuration information indicates the plurality of the component carriers, wherein the component carriers are used for performing the carrier aggregation.

5.  The user equipment according to claim 4,
    wherein the configuration information is transmitted by an RRC signaling message.

**6.** The user equipment according to claim 1,
wherein the control information includes scheduling information which indicates the radio resource, wherein the radio resource is allocated to the user equipment.

**7.** The user equipment according to claim 6,
wherein the scheduling information is transmitted by a physical downlink control channel (PDCCH).

**8.** A method of user equipment, the user equipment being capable of performing carrier aggregation, the user equipment including a diplexer that separates an uplink frequency band of a first component carrier from a downlink frequency band of a second component carrier, and a duplexer that separates an uplink frequency band from a downlink frequency band of each of a plurality of component carriers,
wherein the method comprises steps of:

calculating a lower limit value and, at least, a reference value using control information which is received from a base station, wherein the reference value is greater than the lower limit value; and
transmitting an uplink signal with transmission power calculated from the reference value while using a radio resource in the uplink frequency bands of one or more of the component carriers, wherein the radio resource is specified by the control signal,

wherein, when the control signal specifies the radio resource of two or more of the component carriers, the lower limit value is a value which is less than the lower limit value in a case where the control signal specifies the radio resource of less than two of the component carriers.

# FIG.1

# FIG.2

EP 2 696 520 A1

## FIG.3

RRC SIGNALING MESSAGE

SCHEDULING INFORMATION

[TRANSMISSION SIGNAL]

301 — RRC SIGNALING MESSAGE RECEIVER

304 — CA STATE DETERMINATION UNIT

303 — SCHEDULING INFORMATION RECEIVER

313 — TRANSMISSION POWER DETERMINATION UNIT

315 — TRANSMISSION SIGNAL GENERATING UNIT

TRANS-MISSION DATA

309 — CALCULATION UNIT FOR UPPER LIMIT VALUE (Pcmax,c_H)

311 — CALCULATION UNIT FOR REFERENCE VALUE (Pcmax,c)

305 — CALCULATION UNIT FOR LOWER LIMIT VALUE (Pcmax,c_L)

307 — ATTENUATION TOLERANCE VALUE ($\Delta T_{CA}$) STORAGE UNIT

EP 2 696 520 A1

EP 2 696 520 A1

# FIG.4

FREQUENCY

# FIG.5

| COMBINATION OF ALLOCATED CCs | $\Delta T_{CA}$ |
|---|---|
| (B1,B2) | 5dBm |
| (B1,B3) | 3dBm |
| (B1,B4) | 1dBm |
| (B1,B5) | 0dBm |
| (B2,B3) | 4dBm |
| (B2,B4) | 2dBm |
| (B2,B5) | 1dBm |
| ⋮ | ⋮ |

# FIG.6

BS                                                UE

S61[BROADCAST INFORMATION]

START COMMUNICATION

S62[SCHEDULING INFORMATION]

S63

CALCULATE
$P_{cmax,c}$
($\Delta T_{CA}$=0dB)

S64[RRC SIGNALING]

S65[SCHEDULING INFORMATION (TWO OR MORE BANDS)]

S66

CALCULATE
$P_{cmax,c}$
($\Delta T_{CA}$ IS APPLIED)

S67[SCHEDULING INFORMATION (ONE BAND ONLY)]

S68

CALCULATE
$P_{cmax,c}$
($\Delta T_{CA}$=0dB)

⟶ BROADCAST INFORMATION

⟶ RRC SIGNALING

------⟶ SCHEDULING INFORMATION

<div align="center">

**INTERNATIONAL SEARCH REPORT**

</div>

| | International application No. |
|---|---|
| | PCT/JP2012/056772 |

**A. CLASSIFICATION OF SUBJECT MATTER**
*H04J1/00*(2006.01)i

According to International Patent Classification (IPC) or to both national classification and IPC

**B. FIELDS SEARCHED**

Minimum documentation searched (classification system followed by classification symbols)
H04J1/00

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2012 |
| Kokai Jitsuyo Shinan Koho | 1971-2012 | Toroku Jitsuyo Shinan Koho | 1994-2012 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | NTT DOCOMO, Views on PHR for LTE-Advanced, 3GPP TSG RAN WG1 Meeting #62bis R1-105430, 2010.10.11 | 1-8 |
| A | Motorola, Relay UL/DL timing discussion, 3GPP TSG-RAN WG1 Meeting #60 R1-101119, 2010.02.22 | 1-8 |
| A | LG Electronics, Power Headroom Report in Carrier Aggregation, 3GPP TSG-RAN WG1 Meeting #62bis R1-105650, 2010.10.11 | 1-8 |

☐ Further documents are listed in the continuation of Box C.    ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 19 April, 2012 (19.04.12) | 01 May, 2012 (01.05.12) |

| Name and mailing address of the ISA/ | Authorized officer |
|---|---|
| Japanese Patent Office | |
| Facsimile No. | Telephone No. |

Form PCT/ISA/210 (second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011084057 A